Europäisches Patentamt

European Patent Office

Office européen des brevets

(19)

(11) Publication number: **0 094 459**
**B1**

(12) **EUROPEAN PATENT SPECIFICATION**

(45) Date of publication of patent specification: 28.08.85

(21) Application number: 82302502.8

(22) Date of filing: 17.05.82

(51) Int. Cl.⁴: **F 16 L 55/10,** F 16 K 24/04,
B 60 T 11/30, F 24 D 19/08

(54) Bleed screw for hydraulic systems.

(43) Date of publication of application:
23.11.83 Bulletin 83/47

(45) Publication of the grant of the patent:
28.08.85 Bulletin 85/35

(84) Designated Contracting States:
CH DE FR GB LI

(56) References cited:
DE-A-2 206 227
FR-A-1 319 585
FR-A-2 437 541
FR-E- 82 138

(73) Proprietor: **DEERE & COMPANY**
**1 John Deere Road**
**Moline Illinois 61265 (US)**

(72) Inventor: **Rödel, Werner**
**Alemannenstrasse 52**
**68 Mannheim 52 (DE)**

(74) Representative: **Pears, David Ashley et al**
**REDDIE & GROSE 16 Theobalds Road**
**London WC1X 8PL (GB)**

Courier Press, Leamington Spa, England.

# Description

The present invention relates to a bleed screw for a hydraulic system, comprising an externally threaded body with a plug tip having a sealing surface, and a vent passage opening behind the sealing surface and extending through the body. Such bleed screws are extremely well known and are employed in hydraulic systems, including vehicle brake systems, to bleed off air which has inadvertently entered the system i.e. FR—A1—2 437 541 and FR—A—1 319 585. The bleed screw is screwed into a hole entering a component of the hydraulic system, the hole being provided with a seat at the inner end. When the bleed screw is screwed fully home, the plug tip seals against the seat and prevents any egress of hydraulic fluid. When the screw is slackened off, hydraulic fluid can flow past the tip and enter the vent passage.

In order to facilitate the operation of bleeding the system, a bleed screw is customarily provided at its outer end with a hexagonal or other flatted portion for reception of a wrench and with a nipple onto which it is possible to fit a short length of rubber tubing. However, the present invention is not concerned with these features.

In order to ensure that a hydraulic system is completely clear from air, it is necessary to bleed off a substantial amount of hydraulic fluid. This is caught in a container into which the piece of rubber tubing is led. Although there is no problem with this main flow of bleed fluid, seepage also occurs throughout the bleeding operation past the threads of the screw. The seeping fluid contaminates the outside of the component fitted with the bleed screw and may also contaminate other components and lead to an undesirable build up of dirt. For this reason it is known to provide the screw with a larger diameter unthreaded portion behind the threaded portion and to fit an O-ring seal in an annular groove in this larger diameter unthreaded portion. This clearly overcomes the problem in question but it is an expensive solution to a fairly minor problem. Not only is the screw itself more expensive to manufacture but specially adapted holes are necessary in the components to be fitted with bleed screws. Specifically each hole must have not only a threaded portion with the seat at the inner end but also a counter-bore for reception of the part of the screw carrying the O-ring.

The object of the present invention is to provide a significantly simpler and cheaper solution to the problem and, more particularly, a solution which does not require any modification to the threaded holes provided in components for bleed screws. The bleed screw according to the invention is characterised by an annular groove interrupting the threaded portion and fitted with a sealing ring. The sealing ring is preferably a stock O-ring of material resistant to the hydraulic fluid. Such O-rings are readily available in many sizes. It will be seen that the invention merely requires one simple additional machining opertion, namely machining the annular groove. This may be machined before or after the thread has been formed. Although the sealing ring will be cut into by the thread of the hole into which the screw is fitted, it will nevertheless maintain an adequate seal and completely prevent seepage of fluid past the screw threads in a bleeding operation. This is so in particular because the sealing ring is not subjected to much wear; hydraulic systems need to be bled only at relatively infrequent intervals. When the hydraulic fluid of the system is changed it is naturally possible to change the sealing rings as a matter of routine maintenance.

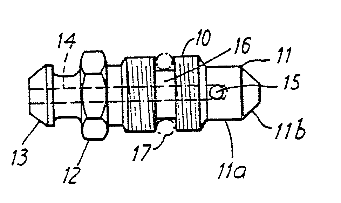

The sole figure of the accompanying drawing represents one embodiment of the invention in elevation. The illustrated bleed screw comprises a threaded body 10 and a plug tip 11 with a cylindrical part 11a and a bevelled end surface 11b for cooperating with the seat in the component fitted with the screw. At the opposite, outer end the screw has a hexagonal head 12 and a nipple 13 for fitting a piece of rubber tubing. A vent passage is formed by two intersecting blind bores, namely an axial bore 14 extending into the screw from the nipple end and a radial bore 15 in the cylindrical part 11a of the plug tip 11. The opening to the vent passage is thus behind the sealing surface 11b.

In accordance with the invention the threaded body 10 of the screw is provided with an annular groove 16 approximately mid-way along the length of the screw threaded portion. A conventional O-ring 17 is fitted in the groove 16. Apart from the groove 16 and the sealing ring 17, the illustrated bleed screw is conventional.

## Claims

1. A bleed screw for a hydraulic system comprising an externally threaded body (10) with a plug tip (11) having a sealing surface (11b), and a vent passage (14, 15) opening behind the sealing surface and extending through the body, characterised by an annular groove (16) interrupting the threaded portion (10) and fitted with a sealing ring (17).

2. A bleed screw according to claim 1, characterised in that the sealing ring (17) is an O-ring.

## Patentansprüche

1. Entlüftungsschraube für ein hydraulisches System mit einem ein Außengewinde aufweisenden Körper (10) mit einer stöpselartigen Spitze (11) mit einer Dichtfläche (11b), und einem Belüftungskanal (14, 15), der sich hinter der Dichtfläche öffnet und sich durch den Körper erstreckt, gekennzeichnet durch eine ringförmige Nut (16), welche den Gewindeabschnitt (10) unterbricht und mit einem Abdichtungsring (17) ausgerüstet ist.

2. Entlüftungsschraube nach Anspruch 1, dadurch gekennzeichnet, daß der Abdichtungsring (17) ein O-Ring ist.

**Revendications**

1. Vis de purge pour systèmes hydrauliques, comprenant un corps (10) muni d'un filetage extérieur et d'une pointe (11) formant bouchon présentant une surface d'étanchéité (116), et un passage (14, 15) formant évent débouchant derrière la surface d'étanchéité et s'étendant à travers le corps, caractérisée par une rainure annulaire (16) interrompant la partie filetée (10) et munie d'un joint d'étanchéité (17).

2. Vis de purge suivant la revendication 1, caractérisée en ce que le joint d'étanchéité (17) est un joint torique.